# EUROPÄISCHE PATENTSCHRIFT

(11) **EP 2 456 186 B1**
(45) Veröffentlichungstag und Bekanntmachung des Hinweises auf die Patenterteilung: **01.05.2013**
(21) Anmeldenummer: 11008251.8
(22) Anmeldetag: 13.10.2011
(51) Int. Cl.: H04M 11/02, H04M 1/02, H04N 7/18

(54) **Türstation eines Haus-Kommunikationssystems**
Door station of a building communication system
Station de porte d'un système de communication interne

(30) Priorität: 18.11.2010 DE 102010051836
(43) Veröffentlichungstag der Anmeldung: 23.05.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(56) Entgegenhaltungen:
- DE-A1-102007 038 804
- DE-A1-102007 059 934
- GB-A- 2 435 979

## Beschreibung

Die Erfindung betrifft eine Türstation eines Haus-Kommunikationssystems mit einer Vielzahl von Wohnungsstationen.

Aus der DE 20 2007 018 516 U1 ist ein Türzugangssystem mit einer eine Kamera und eine Türklingel aufweisenden Türstation und mindestens einer Wohnungsstation bekannt,
- wobei die Kamera eine vor der Türstation sich befindende Person erfasst und ein entsprechendes Bild an eine Bildvergleichseinrichtung der Wohnungsstation weiterleitet,
- wobei die Wohnungsstation einen Referenzspeicher aufweist, in welchem Referenzbilder unterschiedlicher Personen hinterlegt sind,
- wobei die Wohnungsstation einen Speicher aufweist, in welchem unterschiedliche Rufsequenzen hinterlegt sind,
- wobei den unterschiedlichen Referenzbildern unterschiedliche Rufsequenzen zugeordnet sind,
- wobei die Bildvergleichseinrichtung bei Betätigung der Türklingel eine Koinzidenzauswertung hinsichtlich der Bildsignale der Kamera und der Bildsignale des Referenzspeichers durchführt,
- wobei die Bildvergleichseinrichtung den Speicher in Abhängigkeit des Ergebnisses der Koinzidenzauswertung beaufschlagt und
- wobei eine Ansteuereinheit des Speichers einen Tonerzeuger mit der dem Referenzbild zugeordneten Rufsequenz beaufschlägt.

Hierdurch ist es möglich, Familienmitgliedern und fremden Personen unterschiedliche Rufsequenzen oder unterschiedlichen Familienmitgliedern unterschiedliche Rufsequenzen zuzuordnen.

Aus der DE 10 2006 033 133 B3 ist eine Einrichtung zur Erfassung von Personen mittels einer Kamera, insbesondere Videotürsprechanlage bekannt, bei welcher die Wärmestrahlung innerhalb des Gesamt-Erfassungsbereiches der Kamera über mehrere als Thermokette oder Thermosäule oder Thermopile-Zeile oder Thermosensorarray oder Thermopile-Array ausgeführte Temperatursensoren detektiert wird und bei welcher aus dem Gesamt-Erfassungsbereich der Kamera ein begrenzter "gezoomter" Bildausschnitt abgeleitet wird, welcher dem Bereich der von den Temperatursensoren detektierten maximalen Wärmestrahlung folgt.

Hierdurch ist es möglich, dem Monitor der Wohnungsstation (Innenstation) nicht das den gesamten Erfassungsbereich der Kamera zeigende Gesamtbild zur Verfügung zu stellen, sondern den im Vergleich zum Gesamtbild vergrößerten Bildausschnitt, vorzugsweise mit dem Gesicht der zu erfassenden Person, d. h. den Bereich der maximalen Wärmestrahlung vor der Kamera.

Aus der DE 10 2007 059 934 A1 ist ein Hauskommunikationssystem mit einer ein Display mit berührungssensitiver Oberfläche aufweisenden Türstation bekannt, wobei ein Nahbereich-Sensor vorgesehen ist, welcher das Display bei Detektion einer Person innerhalb eines vorgegebenen Nahbereichs in einen Betriebszustand schaltet, bei welchem das Display die Namen der Hausbewohner inklusive den Namen zugeordnete, jeweils Türklingelknöpfe darstellende aktive Schaltflächen anzeigt.

Aus der DE 10 2007 038 804 A1 ist ein Anzeige- und Bediengerät der Gebäudesystemtechnik bekannt, bei welchem ein Referenzspeicher vorgesehen ist, in welchem Referenzbilder unterschiedlicher Personen respektive Benutzer des Anzeige- und Bediengeräts abgespeichert sind. Eine Kamera erfasst eine sich dem Anzeige- und Bediengerät nähernde Person. Es ist eine Bildvergleichseinrichtung vorgesehen, welcher Bildsignale der Kamera und Bildsignale des Referenzspeichers zugeführt sind und welche eine Koinzidenz-Auswertung dieser Bildsignale durchführt. Es ist ein Speicher vorgesehen, in welchem individuelle, benutzerabhängige Menü-Oberflächen abgespeichert sind und welcher ausgangsseitig mit einem Bildschirm verbunden ist. Die Bildvergleichseinrichtung beaufschlagt den Speicher entsprechend dem Ergebnis der Bildsignal-Auswertung, um die der erkannten Person zugeordnete Menü-Oberfläche auf dem Bildschirm zur Darstellung zu bringen.

Aus der GB 2 435 979 A ist eine Sprechanlage bekannt, welche gleichzeitig auch die Funktion eines Sicherheitssystems ausübt. Eine Kamera nimmt Bilder von allen Personen auf, welche eine Sprechtaste / Klingeltaste betätigen oder welche sich in einem Eingangsbereich eines Gebäudes bewegen und diese Bilder werden abgespeichert. Gleichzeitig wird auch die Beleuchtung des Eingangsbereiches und /oder der Sprechtaste / Klingeltaste der Sprechanlage aktiviert. Bei Betätigung der Taste wird eine Sprechverbindung zu einem entfernten Telefon oder einer entfernten Station aktiviert. Die aufgenommenen Bilder können zu einem späteren Zeitpunkt angesehen werden, falls dies erforderlich ist.

Der Erfindung liegt die Aufgabe zugrunde, eine Türstation eines Haus-Kommunikationssystems mit einer Vielzahl von Wohnungsstationen anzugeben, bei welcher einem Besucher in optimierter Form der mutmaßlich zu besuchende Bewohner angezeigt wird.

Diese Aufgabe wird erfindungsgemäß gelöst durch eine Türstation eines Haus-Kommunikationssystems mit einer Vielzahl von Wohnungsstationen, wobei die Türstation ein Anzeige-/Betätigungsfeld mit Klingelknöpfen und mit Namen oder Namensschildern oder Bezeichnungen für die Zuordnung zu einer bestimmten Wohnung mit bestimmter Wohnungsstation des Hauses aufweist,
- wobei die Türstation eine Kamera inklusive Bildverarbeitung zur Erfassung von Besuchern, einen Referenzspeicher für hinterlegte Referenzbilder von Besuchern und eine mit Kamera und Referenzspeicher verbundene Verarbeitungs-/Ansteuereinheit inklusive Bildvergleichseinrichtung aufweist,
- wobei im Referenzspeicher die Zuordnung zwischen einem bestimmten Referenzbild und einer bestimmten Wohnungsstation abgespeichert ist,
- wobei mittels der Verarbeitungs-/Ansteuereinheit eine Koinzidenzauswertung zwischen einem aktuell von der Kamera erfassten Bild und den Referenzbildern des Referenzspeichers erfolgt,
- wobei die Verarbeitungs-/Ansteuereinheit bei einer festgestellten hinreichenden Übereinstimmung zwischen einem bestimmten gespeicherten Referenzbild und dem aktuell erfassten Bild das Anzeige-/Betätigungsfeld ansteuert, um derart den Klingelknopf oder den Namen oder das Namensschild oder die Bezeichnung, welche der bestimmten Wohnungsstation und damit dem bestimmten Referenzbild zugeordnet ist, optisch hervorzuheben.

Die mit der Erfindung erzielbaren Vorteile bestehen insbesondere darin, dass es dem Besucher sehr erleichtert wird, aus der Vielzahl der Bewohner eines Hauses den richtigen Bewohner auszuwählen, insbesondere bei Türstationen, bei denen keine Namensschilder, sondern lediglich mit Ziffern versehene Klingelknöpfe vorgesehen sind.

Zum Zwecke des Hervorhebens in optischer Art und Weise kann die Beleuchtung des bestimmten Klingelknopfes oder des Namens oder des Namensschilds oder der Bezeichnung, welche der bestimmten Wohnungsstation und damit dem bestimmten Referenzbild zugeordnet ist,
- verstärkt sein, d. h. heller sein als die weiteren Klingelknöpfe....
- farblich gegenüber den weiteren Klingelknöpfen....verändert sein,
- mit definierter Blinkfrequenz angesteuert sein.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein Prinzipschaltbild eines Haus-Kommunikationssystems,
- Fig. 2: ein Anzeige-/Betätigungsfeld mit Klingelknöpfen und Namen,
- Fig. 3: ein Anzeige-/Betätigungsfeld mit Klingelknöpfen, welche mit Ziffern bezeichnet sind.

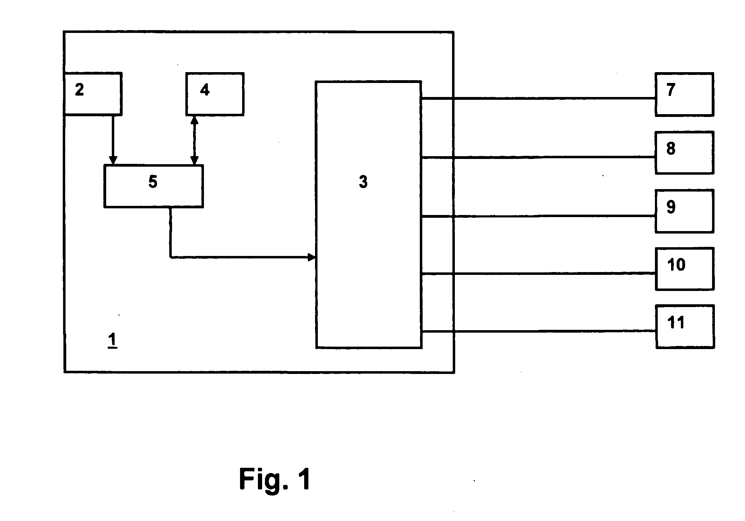

In Fig. 1 ist ein Prinzipschaltbild eines Haus-Kommunikationssystems dargestellt. Es sind eine Türstation 1 und mehrere - im konkreten Ausführungsbeispiel fünf - mit dieser Türstation 1 verbundene Wohnungsstationen 7, 8, 9, 10, 11 zu erkennen, wobei beliebig viele weitere Wohnungsstationen vorhanden sein können. Die Verbindung zwischen der Türstation 1 und den Wohnungsstationen 7 ― 11 kann selbstverständlich auch in Bustopologie ausgeführt sein. Die Türstation 1 weist ein Anzeige-/Betätigungsfeld 3 mit Klingelknöpfen und mit Namen oder Bezeichnungen, insbesondere Ziffern auf, um es einem Besucher zu ermöglichen, die gewünschte Wohnung respektive den gewünschten Bewohner per "Knopfdruck" und damit per Klingelton respektive Rufsequenz anzuwählen. Das Anzeige-/Betätigungsfeld 3 kann beispielsweise in folgenden unterschiedlichen Ausführungsformen ausgebildet sein:
● in Form eines Displays zur Anzeige eines Namens oder einer Ziffer je Wohnung und eines integrierten Klingelknopfes je zugeordnetem Namen / zugeordneter Ziffer,
● in Form eines Touchscreens mit per Fingerdruck anwählbaren "Klingelknöpfen" und zugeordneten Namen / Ziffern,
● in Form von Klingelknöpfen, denen jeweils ein Namensschild oder ein Ziffernschild zugeordnet ist,
● in Form von Klingelknöpfen, wobei ein zugeordneter Name / eine zugeordnete Ziffer im Klingelknopf selbst integriert ist.

Von Wichtigkeit ist bei allen unterschiedlichen Ausführungsformen des Anzeige-/Betätigungsfeldes 3, dass ein bestimmter anzuwählender Klingelknopf mit zugeordnetem Namen / zugeordneter Ziffer des Anzeige-/Betätigungsfeldes 3 in besonderer Weise optisch hervorgehoben werden kann, was vorzugsweise durch eine Beleuchtungs-Maßnahme erfolgt, wie
● verstärkte (hellere) Beleuchtung eines bestimmten Klingelknopfes mit zugeordnetem Namen / zugeordneter Ziffer, während die übrigen Klingelknöpfe / Namen / Ziffern mittels einer helligkeitsreduzierten Basis-Beleuchtung beleuchtet werden,
● farblich hervorgehobene, beispielsweise rote Beleuchtung eines bestimmten Klingelknopfes mit zugeordnetem Namen / zugeordneter Ziffer, während die übrigen Klingelknöpfe / Namen / Ziffern mittels einer helligkeitsreduzierten weißen Basis-Beleuchtung beleuchtet werden,
● blinkende Beleuchtung eines bestimmten Klingelknopfes mit zugeordnetem Namen / zugeordneter Ziffer, während die übrigen Klingelknöpfe / Namen / Ziffern mittels einer helligkeitsreduzierten Dauer-Beleuchtung beleuchtet werden,
● Änderung der Anordnung / Reihenfolge der Klingelknöpfe im Anzeige-/Betätigungsfeld 3.

Die Türstation 1 weist des Weiteren eine Kamera 2 inklusive Bildverarbeitung, einen Referenzspeicher 4 zur Abspeicherung von Referenzbildern unterschiedlicher Personen respektive Besucher und eine Verarbeitungs-/Ansteuereinheit 5 inklusive Bildvergleichseinrichtung auf. Jedes abgespeicherte Referenzbild ist einer bestimmten Wohnung und damit einem bestimmten Klingelknopf mit entsprechendem Namen / entsprechender Ziffer zugeordnet.

Nachdem sich eine Person / ein Besucher der Türstation 1 genähert hat und vor dem Anzeige-/Betätigungsfeld 3 steht, wird das Gesicht dieser Person mittels der Kamera 2 erfasst und nach entsprechender Bildverarbeitung an die Verarbeitungs-/Ansteuereinheit 5 weitergeleitet. Hinsichtlich der Bildverarbeitung können beispielsweise die zur Erfassung des Gesichts einer Person erforderlichen Kriterien - gezoomter Bildausschnitt mit dem Gesicht aus dem Gesamtbild der Kamera - gemäß der eingangs erwähnten DE 10 2006 033 133 B3 verwendet werden. Im Zusammenwirken mit dem Referenzspeicher 4 erfolgt seitens der Verarbeitungs-/Ansteuereinheit 5 eine Koinzidenzauswertung, d. h. die gespeicherten Referenzbilder werden mit dem aktuell erfassten Bild auf Übereinstimmung überprüft. Sobald eine hinreichende Übereinstimmung zwischen einem bestimmten gespeicherten Referenzbild und dem aktuell erfassten Bild festgestellt wird, erfolgt eine dementsprechende Ansteuerung des Anzeige-/Betätigungsfeldes 3 seitens der Verarbeitungs-/Ansteuereinheit 5, d. h. der dem bestimmten gespeicherten Referenzbild zugeordnete bestimmte Klingelknopf mit entsprechendem Namen / entsprechender Ziffer wird beaufschlagt und in besonderer Weise hervorgehoben, was vorzugsweise durch eine der oben erläuterten Beleuchtungs-Maßnahmen erfolgt.

Nachfolgend drückt die Person auf den in optischer Weise hervorgehobenen Klingelknopf, wodurch der Klingelton in der zugeordneten Wohnung ausgelöst wird.

Zur Abspeicherung von Referenzbildern und zur Zuordnung einer bestimmten Person respektive eines bestimmten Besuchers zu einer bestimmten Wohnung und damit zu einem bestimmten Klingelknopf werden während einer Einlernphase mittels der Konfiguration Kamera 2 + Referenzspeicher 4 + Verarbeitungs-/Ansteuereinheit 5 jeweils die Zuordnung zwischen einer bestimmten Person und einem bestimmten, von dieser Person betätigten Klingelknopf permanent erfasst, ausgewertet und abgespeichert. Diese Beobachtung von Besuchern und die hieraus abgeleitete Zuordnung zu einer bestimmten Wohnung können nicht nur während einer definierten Einlernphase, sondern permanent erfolgen, so dass auch während des Normalbetriebes des Haus-Kommunikationssystems laufend ein diesbezüglicher "Update" stattfindet.

Auch wenn der Referenzspeicher 4 in Fig. 1 beispielhaft innerhalb der Türstation 1 angeordnet ist, kann er sich alternativ auch an einem anderen Ort innerhalb des Haus-Kommunikationssystems befinden, beispielsweise in einer Zentralstation des Haus-Kommunikationssystems.

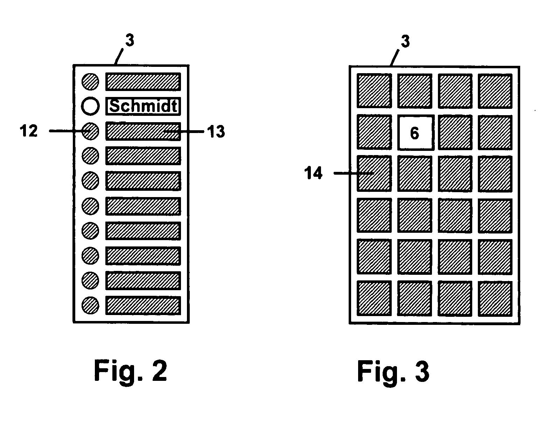

In Fig. 2 ist ein Anzeige-/Betätigungsfeld mit Klingelknöpfen und Namen dargestellt. Bei diesem Anzeige-/Betätigungsfeld 3 sind beispielhaft zehn Klingelknöpfe 12 vorhanden und untereinander angeordnet, wobei jedem dieser Klingelknöpfe ein eigenes Namenschild oder ein eigener Name 13 zugeordnet ist. Beim gezeigten Fall ist der zweite Klingelknopf von oben und/oder das zweite Namensschild respektive Name "Schmidt" von oben hervorgehoben, z. B. mittels einer im Vergleich zu den übrigen Klingelknöpfen und Namensschildern respektive Namen helleren Beleuchtung.

In Fig. 3 ist ein Anzeige-/Betätigungsfeld mit Klingelknöpfen dargestellt, welche mit integrierten Ziffern bezeichnet sind. Bei diesem Anzeige-/Betätigungsfeld 3 sind beispielhaft vierundzwanzig Klingelknöpfe 14 in Form einer Matrix mit sechs Zeilen und vier Spalten angeordnet. Beim gezeigten Fall ist der Klingelknopf "6" in der zweiten Spalte der zweiten Zeile hervorgehoben, z. B. mittels einer im Vergleich zu den übrigen Klingelknöpfen helleren Beleuchtung.

Selbstverständlich können die Türstation 1 bzw. die Wohnungsstationen 7 ― 11 darüber hinaus auch mit weiteren Komponenten eines Haus-Kommunikationssystems versehen sein, wie Mikrofon, Lautsprecher, Display zur Anzeige des Besuchers, Betätigungstaste für Türöffner usw., was im vorstehend behandelten Zusammenhang jedoch nicht weiter von Bedeutung ist.

### Bezugszeichenliste

| | |
|---|---|
| 1 | Türstation |
| 2 | Kamera inklusive Bildverarbeitung |
| 3 | Anzeige-/Betätigungsfeld mit Klingelknöpfen und mit Namen oder Bezeichnungen, insbesondere Ziffern |
| 4 | Referenzspeicher für hinterlegte Referenzbilder |
| 5 | Verarbeitungs-/Ansteuereinheit inklusive Bildvergleichseinrichtung |
| 6 | - |
| 7 | Wohnungsstation |
| 8 | Wohnungsstation |
| 9 | Wohnungsstation |
| 10 | Wohnungsstation |
| 11 | Wohnungsstation |
| 12 | Klingelknöpfe |
| 13 | Namen oder Namensschild |
| 14 | Klingelknöpfe, welche mit Ziffern bezeichnet sind |

## Patentansprüche

1. Türstation eines Haus-Kommunikationssystems mit einer Vielzahl von Wohnungsstationen (7 - 11), wobei die Türstation (1) ein Anzeige-/Betätigungsfeld (3) mit Klingelknöpfen (12, 14) und mit Namen oder Namensschildern (13) oder Bezeichnungen für die Zuordnung zu einer bestimmten Wohnung mit bestimmter Wohnungsstation (7 - 11) des Hauses aufweist, **dadurch gekennzeichnet,**
• **dass** die Türstation (1) eine Kamera (2) inklusive Bildverarbeitung zur Erfassung von Besuchern, einen Referenzspeicher (4) für hinterlegte Referenzbilder von Besuchern und eine mit Kamera (2) und Referenzspeicher (4) verbundene Verarbeitungs-/Ansteuereinheit (5) inklusive Bildvergleichseinrichtung aufweist,
• **dass** im Referenzspeicher (4) die Zuordnung zwischen einem-bestimmten Referenzbild und einer bestimmten Wohnungsstation (7 - 11) abgespeichert ist,
• **dass** mittels der Verarbeitungs-/Ansteuereinheit (5) eine Koinzidenzauswertung zwischen einem aktuell von der Kamera (2) erfassten Bild und den Referenzbildern des Referenzspeichers erfolgt,
• **dass** die Verarbeitungs-/Ansteuereinheit (5) dazu geeignet ist bei einer festgestellten hinreichenden Übereinstimmung zwischen einem bestimmten gespeicherten Referenzbild und dem aktuell erfassten Bild das Anzeige-/Betätigungsfeld (3) anzusteuern, um derart den Klingelknopf (12, 14) oder den Namen oder das Namensschild (13) oder die Bezeichnung, welche der bestimmten Wohnungsstation (7 - 11) und damit dem bestimmten Referenzbild zugeordnet ist, optisch hervorzuheben.

2. Türstation nach Anspruch 1, **dadurch gekennzeichnet, dass** die Beleuchtung des bestimmten Klingelknopfes (12, 14) oder des Namens oder des Namensschilds (13) oder der Bezeichnung, welche der bestimmten Wohnungsstation (7 - 11) und damit dem bestimmten Referenzbild zugeordnet ist, verstärkt ist.

3. Türstation nach Anspruch 1, **dadurch gekennzeichnet, dass** die Beleuchtung des bestimmten Klingelknopfes (12, 14) oder des Namens oder des Namensschilds (13) oder der Bezeichnung, welche der bestimmten Wohnungsstation (7 - 11) und damit dem bestimmten Referenzbild zugeordnet ist, farblich verändert ist.

4. Türstation nach Anspruch 1, **dadurch gekennzeichnet, dass** die Beleuchtung des bestimmten Klingelknopfes (12, 14) oder des Namens oder des Namensschilds (13) oder der Bezeichnung, welche der bestimmten Wohnungsstation (7 - 11) und damit dem bestimmten Referenzbild zugeordnet ist, mit definierter Blinkfrequenz angesteuert ist.

5. Türstation nach Anspruch 1, **gekennzeichnet durch** eine Änderung der Anordnung / Reihenfolge der Klingelknöpfe (12, 14) im Anzeige-/Betätigungsfeld 3.

6. Türstation nach einem der vorstehenden Ansprüche, **dadurch gekennzeichnet, dass** der Name oder die Bezeichnung, im Klingelknopf (14) selbst integriert ist.

7. Türstation eines Haus-Kommunikationssystems mit einer Vielzahl von Wohnungsstationen (7 - 11) und einer Zentralstation, wobei die Türstation (1) ein Anzeige-/Betätigungsfeld (3) mit Klingelknöpfen (12, 14) und mit Namen oder Namensschildern (13) oder Bezeichnungen für die Zuordnung zu einer bestimmten Wohnung mit bestimmter Wohnungsstation (7 - 11) des Hauses aufweist, **dadurch gekennzeichnet,**
• **dass** die Zentralstation einen Referenzspeicher (4) für hinterlegte Referenzbilder von Besuchern aufweist,
• **dass** die Türstation (1) eine Kamera (2) inklusive Bildverarbeitung zur Erfassung von Besuchern und eine mit Kamera (2) und Referenzspeicher (4) verbundene Verarbeitungs-/Ansteuereinheit (5) inklusive Bildvergleichseinrichtung aufweist,
• **dass** im Referenzspeicher (4) die Zuordnung zwischen einem bestimmten Referenzbild und einer bestimmten Wohnungsstation (7 - 11) abgespeichert ist,
• **dass** mittels der Verarbeitungs-/Ansteuereinheit (5) eine Koinzidenzauswertung zwischen einem aktuell von der Kamera (2) erfassten Bild und den Referenzbildern des Referenzspeichers (4) erfolgt,
• **dass** die Verarbeitungs-/Ansteuereinheit (5) dazu geeignet ist bei einer festgestellten hinreichenden Übereinstimmung zwischen einem bestimmten gespeicherten Referenzbild und dem aktuell erfassten Bild das Anzeige-/Betätigungsfeld (3) anzusteuern, um derart den Klingelknopf (12, 14) oder den Namen oder das Namensschild (13) oder die Bezeichnung, welche der bestimmten Wohnungsstation (7 - 11) und damit dem bestimmten Referenzbild zugeordnet ist, optisch hervorzuheben.

## Claims

1. Door station of a building communication system having a multiplicity of residence stations (7-11), the door station (1) having a display/actuation field (3) with bell buttons (12, 14) and with names or nameplates (13) or designations for association with a particular residence having a particular residence station (7-11) of the building, **characterized**
• **in that** the door station (1) has a camera (2), including image processing, for recording visitors, a reference memory (4) for stored reference images of visitors and a processing/control unit (5), including an image comparison device, which is connected to the camera (2) and to the reference memory (4),
• **in that** the association between a particular reference image and a particular residence station (7-11) is stored in the reference memory (4),
• **in that** the processing/control unit (5) is used to evaluate a coincidence between an image currently being recorded by the camera (2) and the reference images in the reference memory,
• **in that**, if a sufficient correspondence between a particular stored reference image and the currently recorded image is determined, the processing/control unit (5) is suitable for controlling the display/actuation field (3) in order to thus optically highlight the bell button (12, 14) or the name or the nameplate (13) or the designation associated with the particular residence station (7-11) and thus the particular reference image.

2. Door station according to Claim 1, **characterized in that** the illumination of the particular bell button (12, 14) or the name or the nameplate (13) or the designation associated with the particular residence station (7-11) and thus the particular reference image is intensified.

3. Door station according to Claim 1, **characterized in that** the colour of the illumination of the particular bell button (12, 14) or the name or the nameplate (13) or the designation associated with the particular residence station (7-11) and thus the particular reference image is changed.

4. Door station according to Claim 1, **characterized in that** the illumination of the particular bell button (12, 14) or the name or the nameplate (13) or the designation associated with the particular residence station (7-11) and thus the particular reference image is controlled with a defined flashing frequency.

5. Door station according to Claim 1, **characterized by** a change in the arrangement/order of the bell buttons (12, 14) in the display/actuation field (3).

6. Door station according to one of the preceding claims, **characterized in that** the name or the designation is integrated in the bell button (14) itself.

7. Door station of a building communication system having a multiplicity of residence stations (7-11) and a central station, the door station (1) having a display/actuation field (3) with bell buttons (12, 14) and with names or nameplates (13) or designations for association with a particular residence having a particular residence station (7-11) of the building, **characterized**
• **in that** the central station has a reference memory (4) for stored reference images of visitors,
• **in that** the door station (1) has a camera (2), including image processing, for recording visitors and a processing/control unit (5), including an image comparison device, which is connected to the camera (2) and to the reference memory (4),
• **in that** the association between a particular reference image and a particular residence station (7-11) is stored in the reference memory (4),
• **in that** the processing/control unit (5) is used to evaluate a coincidence between an image currently being recorded by the camera (2) and the reference images in the reference memory (4),
• **in that**, if a sufficient correspondence between a particular stored reference image and the currently recorded image is determined, the processing/control unit (5) is suitable for controlling the display/actuation field (3) in order to thus optically highlight the bell button (12, 14) or the name or the nameplate (13) or the designation associated with the particular residence station (7-11) and thus the particular reference image.

## Revendications

1. Station de porte d'un système de communication domestique comportant une pluralité de stations d'habitation (7 - 11), dans lequel la station de porte (1) comprend un panneau d'affichage/de commande (3) muni de boutons de sonnerie (12, 14) et de noms ou d'étiquettes de noms (13) ou d'appellations pour l'association avec une habitation particulière comportant une station d'habitation particulière (7 - 11) de l'habitation, **caractérisée**
• **en ce que** la station de porte (1) comprend une caméra (2) comportant un traitement d'image pour la détection de visiteurs, une mémoire de référence (4) pour des images de référence de visiteurs stockées et une unité de traitement/commande (5) comportant un dispositif de comparaison d'images, connectée à la caméra (2) et à la mémoire de référence (4),
• **en ce que** l'association entre une image de référence particulière et une station d'habitation particulière (7 - 11) est stockée dans la mémoire de référence (4),
• **en ce qu'**une évaluation de coïncidence entre une image actuelle détectée par la caméra (2) et les images de référence de la mémoire de référence est effectuée au moyen de l'unité de traitement/commande (5),
• **en ce que** l'unité de traitement/commande (5) est conçue pour commander le panneau d'affichage/de commande (3), lorsqu'une concordance suffisante est établie entre une image de référence stockée particulière et l'image actuelle détectée afin de faire ressortir optiquement le bouton de sonnerie (12, 14) ou le nom ou l'étiquette de nom (13) ou l'appellation à laquelle est associée la station d'habitation particulière (7 - 11) et par conséquent, l'image de référence particulière.

2. Station de porte selon la revendication 1, **caractérisée en ce que** l'éclairage du bouton de sonnerie particulier (12, 14) ou du nom ou de l'étiquette de nom (13) ou de l'appellation qui est associée à la station d'habitation particulière (7 - 11), et par conséquent à l'image de référence particulière, est amplifié.

3. Station de porte selon la revendication 1, **caractérisée en ce que** l'éclairage du bouton de sonnerie particulier (12, 14) ou du nom ou de l'étiquette de nom (13) ou de l'appellation qui est associée à la station d'habitation particulière (7 - 11), et par conséquent à l'image de référence particulière, est modifié de manière colorée.

4. Station de porte selon la revendication 1, **caractérisée en ce que** l'éclairage du bouton de sonnerie particulier (12, 14) ou du nom ou de l'étiquette de nom (13) ou de l'appellation qui est associée à la station d'habitation particulière (7 - 11), et par conséquent à l'image de référence particulière, est commandé avec un clignotement de fréquence définie.

5. Station de porte selon la revendication 1, **caractérisée par** une modification de l'agencement/de l'ordre des boutons de sonnerie (12, 14) sur le panneau d'affichage/de commande 3.

6. Station de porte selon l'une quelconque des revendications précédentes, **caractérisée en ce que** le nom ou l'appellation est intégré au bouton de sonnerie (14) lui-même.

7. Station de porte d'un système de communication domestique comportant une pluralité de stations d'habitation (7 - 11) et une station centrale, dans laquelle la station de porte (1) comprend un panneau d'affichage/de commande (3) muni de boutons de sonnerie (12, 14) et de noms ou d'étiquettes de noms (13) ou d'appellations pour l'association avec une habitation particulière comportant une station d'habitation particulière (7 - 11) de l'habitation, **caractérisé**
• **en ce que** la station centrale comprend une mémoire de référence (4) destinée à des images de référence stockées de visiteurs,
• **en ce que** la station de porte (1) comprend une caméra (2) comportant un traitement d'image pour la détection de visiteurs et une unité de traitement/commande (5) comportant un dispositif de comparaison d'images, connectée à la caméra (2) et à la mémoire de référence (4),
• **en ce que** l'association entre une image de référence particulière et une station d'habitation particulière (7 - 11) est stockée dans la mémoire de référence (4),
• **en ce qu'**une évaluation de coïncidence entre une image actuelle détectée par la caméra (2) et les images de référence de la mémoire de référence (4) est effectuée au moyen de l'unité de traitement/commande (5) ,
• **en ce que** l'unité de traitement/commande (5) est conçue pour commander le panneau d'affichage/commande (3), lorsqu'une concordance suffisante est établie entre une image de référence stockée particulière et l'image actuelle détectée afin de faire ressortir optiquement le bouton de sonnerie (12, 14) ou le nom ou l'étiquette de nom (13) ou l'appellation à laquelle est associée la station d'habitation particulière (7 - 11) et par conséquent, l'image de référence particulière.
